# EUROPEAN PATENT APPLICATION

(11) **EP 2 037 349 A2**
(43) Date of publication of application: **18.03.2009**
(21) Application number: 08015955.1
(22) Date of filing: 10.09.2008
(51) Int. Cl.: G06F 3/033

(54) **Input apparatus**

(30) Priority: 11.09.2007 JP 2007235516
(71) Applicant: Alps Electric Co., Ltd., Tokyo 145-8501 (JP)
(72) Inventor: Sato, Tadamitsu, Tokyo 145-8501 (JP)
(74) Representative: Klunker . Schmitt-Nilson . Hirsch

(57) **Abstract**

An input apparatus includes a surface plate 2, an electrostatic capacitive sensor 4 disposed under the surface plate 2, and a strain sensor 3 disposed between the electrostatic capacitive sensor 4 and the surface plate 2 and fixed to the back surface of the surface plate 2. As a first input operation, when a finger F is moved on an operation area 2a of the surface plate 2, the movement position can be detected by the electrostatic capacitive sensor 4. As a second input operation, when the operation area 2a is pressed down, the pressing force can be detected by the strain sensor 3. A series of the first input operation and the second input operation can be performed without leaving the finger F from the operation area 2a. Therefore, the input operation can be simply performed.

## Description

### BACKGROUND

### 1. Technical Field

The present invention relates to an input apparatus operable to perform a simple input operation.

### 2. Related Art

In Japanese Unexamined Patent Application Publication No. 2002-123363, there are provided a flat input apparatus capable of a coordinate input, and individual switch units corresponding to push buttons under the flat input apparatus.

In Japanese Unexamined Patent Application Publication No. 2002-123363, any one of the switch portions is used as, for example, a determined button (defined button), movement information is input to the flat input apparatus by an operation object, and then the determined button is pressed. Accordingly, there is a problem that the operation is complicated since it is necessary that a finger is left from an operation surface and the finger is moved to the position of the determined button.

### SUMMARY

The invention has been made to solve the aforementioned problem, and particularly, to provide an input apparatus operable to perform a simple operation.

An input apparatus according to an embodiment of the invention is operable to perform a series of a first input operation of detecting a movement position of an operation object on an operation area with an electrostatic capacitive sensor, and a second input operation of detecting a pressing force with a pressing force detecting means at the time of pressing the operation area down with the operation object, without leaving the operation object from the operation area.

According to an aspect of the invention, a series of the first input operation and the second input operation can be performed without leaving the operation object (finger or pen) from the operation area. Therefore, the input operation can be simply performed.

In the input apparatus according to an aspect of the invention, it is desirable that a surface plate is disposed on the electrostatic capacitive sensor and has the operation area, a strain sensor as the pressing force detecting means is disposed between the electrostatic capacitive sensor and the surface plate and fixed to the back surface of the surface plate, the strain sensor is strained when the operation area is bent by the pressing of the operation object, and the pressing force is detected with change in output power based on change in resistance of the strain sensor.

With such a configuration, the pressing force can be detected with high precision even when the pressed position is anywhere on the operation area. Therefore, the second input operation can be appropriately performed, and the input apparatus can have a simple configuration and can be made thin.

In addition to the above-described configuration, it is desirable that the surface plate is provided with a support area in the operation area and on the side of the operation area, and the electrostatic capacitive sensor is disposed at a position opposed to the operation area in a height direction, and it is desirable that a space is formed between the operation area and the electrostatic capacitive sensor to make the surface plate deformable down at the time of pressing down the operation area with the operation object, by which the operation area is supported to be bendable and deformable, and the support area is fixedly supported not to be bendable and deformable. With such a configuration, the pressing force can be detected with high precision by the strain sensor.

In the input apparatus according to an embodiment of the invention, it is desirable that the surface plate is provided with an intermediate area between the operation area and the support area, and the intermediate area is bendable and deformable together with the operation area, and it is desirable that the strain sensor is fixed to the back surface of the intermediate area.

With such a configuration, it is possible to prevent the strain sensor from obstructing the deformation of the operation area into the bending space.

According to an aspect of the invention, the strain sensor is disposed on the back surface of the intermediate area. Therefore, a screen display unit may be used as the operation area.

In the input apparatus according to an embodiment of the invention, it is desirable that the strain sensor is formed by printing on the surface of the electrostatic capacitive sensor, and the surface of the strain sensor is fixed to the back surface of the surface plate.

With such a configuration, the electrostatic capacitive sensor may be only attached to the back surface of the surface plate, and thus the input apparatus can have a simple structure. In addition, the strain sensor can be simply and appropriately formed at a predetermined position with respect to the surface plate.

In the input apparatus according to an embodiment of the invention, it is desirable that a concave portion is formed on the back surface of the surface plate to which the strain sensor is fixed, and the strain sensor is disposed in the concave portion.

With such a configuration, when the surface plate is bent, the strain sensor can be effectively strained and thus it is possible to detect the pressing force with high precision.

According to the input apparatus of the invention, a series of the first input operation and the second input operation can be performed without leaving the operation object (finger or pen) from the operation area, and thus the input operation can be simply performed.

### BRIEF DESCRIPTION OF THE DRAWINGS

Fig. 1 is a sectional view illustrating an input apparatus according to a first embodiment of the invention (the input apparatus shown in Fig. 3 is taken along the line A-A in a thickness direction, and the section is viewed in the direction indicated by the arrows).
Fig. 2 is a sectional view illustrating the input apparatus shown in Fig. 1 in a state where an operation area of the input apparatus is pressed by a finger F.
Fig. 3 is a partial plan view illustrating the input apparatus according to the embodiment of the invention.
Fig. 4 is a diagram illustrating a configuration of a pressing force (bending degree) detecting circuit.
Fig. 5 is a graph illustrating a relation between a pressing force (bending degree) and an output (output waveform diagram of analog signal).
Fig. 6 is a sectional view illustrating an input apparatus according to a second embodiment of the invention.
Fig. 7 is a plan view illustrating an electrostatic capacitive sensor and a strain sensor built in the input apparatus shown in Fig. 6.

### DESCRIPTION OF EXEMPLARY EMBODIMENTS

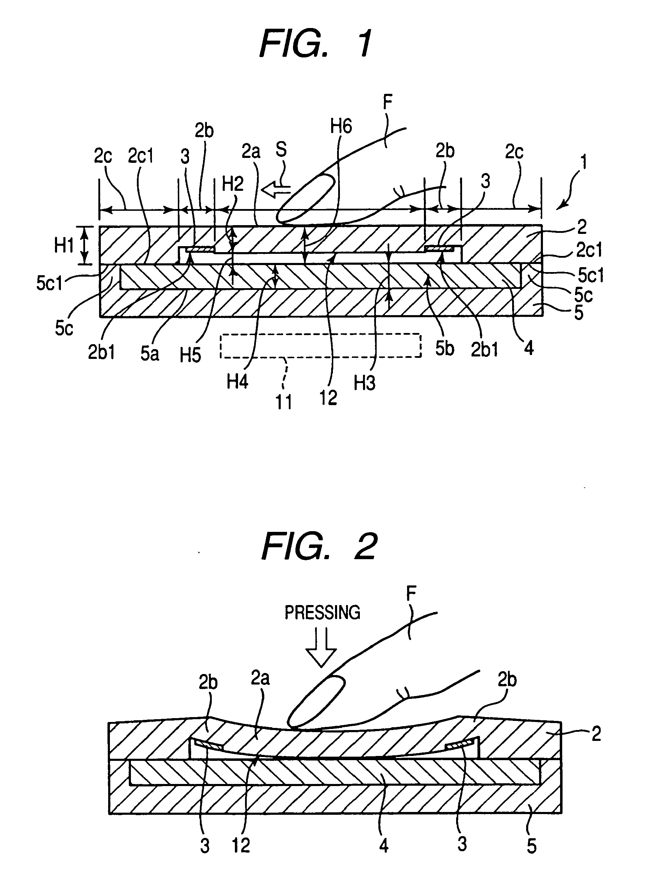

As shown in Fig. 1, an input apparatus 1 according to an embodiment of the invention includes a surface plate 2, a strain sensor (strain gauge) 3, an electrostatic capacitive sensor 4, and a support member 5.

The surface plate 2 is, for example, an acryl transparent plate, and a raw material and a color thereof are not limited. In the present embodiment, the surface plate 2 is used as a plate having a display screen of a cellular phone or the like, and thus at least a screen display unit (operation area 2a) is transparent. The surface plate 2 has flexibility, which is smaller than flexibility of the electrostatic capacitive sensor 4. Accordingly, the surface plate 2 is bent less than the electrostatic capacitive sensor 4.

As shown in Figs. 1 and 2, an operation area 2a is provided at the center of the surface plate 2. An intermediate area 2b is provided to surround the operation area 2a, and a support area 2c is provided to surround the intermediate area 2b. As shown in Fig. 1, the support area 2c has the largest thickness H1. The thickness H1 of the support area 2c is substantially in the range of 0.8 to 2.0 mm. In the case that the support area 2c is the area that can be detected by the electrostatic capacitive sensor 4, the maximum thickness H1 of the support area 2c is about 2mm.

A thickness H2 of the operation area 2a is smaller than the thickness H1 of the support area 2c, and is substantially in the range of 0.8 to 1.5 mm. The whole operation area 2a is the area where the operation position can be detected by the electrostatic capacitive sensor 4. However, when the thickness H2 of the operation area 2a is too large, a distance H6 on the surface between the electrostatic capacitive sensor 4 and the operation area 2a is large and thus it is difficult to detect a position with high precision. Accordingly, the thickness H2 of the operation area 2a is adjusted so that the distance H6 obtained by adding the thickness H2 of the operation area 2a and a height H5 of a space 12 is 2 mm or less. The operation area 2a is a screen display unit, and has preferably small flexibility. Specifically, flexibility to be bent down by several tens µm (e.g., 10 µm) at the time of applying a load of about 300 gf down is preferable.

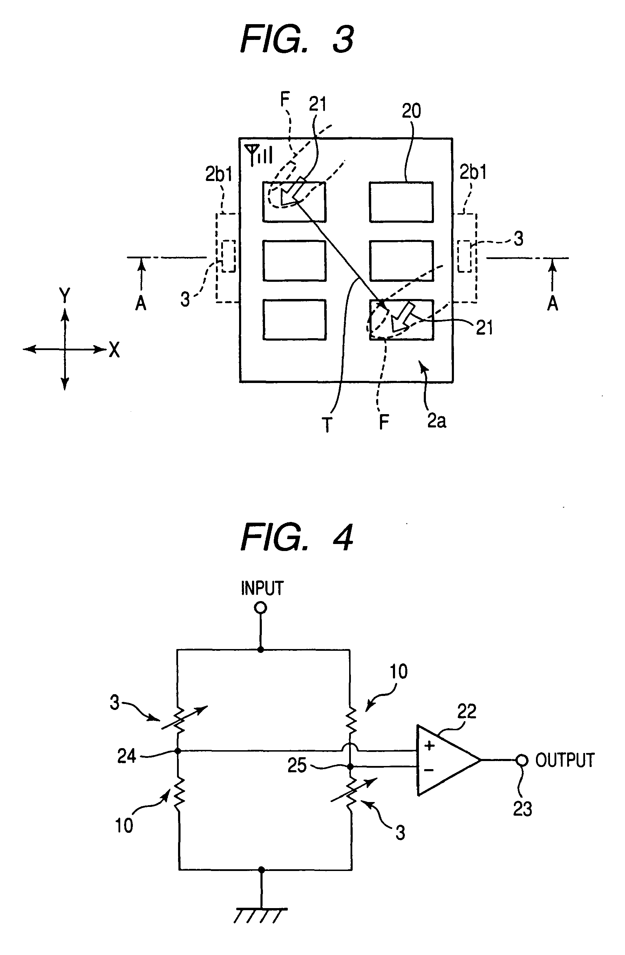

As shown in Fig. 1, a concave portion 2b1 is formed on the back surface of the intermediate area 2b of the surface plate 2, and a strain sensor 3 is housed in the concave portion 2b1. The concave portion 2b1 may be formed on the whole intermediate area 2b, and may be partially formed only at a portion where the strain sensor 3 is installed as shown in Fig. 3.

The strain sensor 3 is to detect strain based on resistance changed by applying an external force to a resistor constituting the strain sensor 3 to elongate and contract. In the embodiment shown in Fig. 1, two strain sensors 3 are provided, and they form a bridge circuit by combining with a fixed resistor 10 (see Fig. 4).

The electrostatic capacitive sensor 4 is fixed and supported to a concave bottom surface 5a of the support member 5, and is fixed to the back surface 2c1 of the support area 2c of the surface plate 2. The electrostatic capacitive sensor 4 has a structure that a plurality of transparent electrodes are opposed in matrix on and under a transparent resin sheet, which is formed of PET or the like having an insulating property and having a predetermined permittivity, at each portion in an X direction and a Y direction perpendicular to the X direction.

A planar size of the electrostatic capacitive sensor 4 may be equal to or larger than a planar size of the operation area 2a of the surface plate 2, and the electrostatic capacitive sensor 4 is opposed to the whole lower area of the operation area 2a. In the embodiment shown in Fig. 1, the planar size of the electrostatic capacitive sensor 4 is larger than the planar size of the operation area 2a of the surface plate 2.

As described above, the thickness H2 of the operation area 2a of the surface plate 2 is smaller than the thickness H1 of the support area 2c. As shown in Fig. 1, a peripheral portion on the surface of the electrostatic capacitive sensor 4 located on the back surface of the surface plate 2 is fixed and supported to the back surface 2c1 of the support area 2c, and the space 12 is formed between the operation area 2a and the electrostatic capacitive sensor 4. The space 12 is a space to allow the surface plate 2 to be bendable and deformable at the time of pressing the operation area 2a down with a finger F. Since the operation area 2a may be bent down by several tens µm (e.g., 10 µm) at the time of pressing the operation area 2a down, the height H5 of the area 12 may be several tens µm (e.g., 10 µm).

A housing portion 5b that can house the electrostatic capacitive sensor 4 is formed at the center of the support member 5. A planar size of the housing portion 5b is substantially equal to the planar size of the electrostatic capacitive sensor 4, and the electrostatic capacitive sensor 4 is installed on the concave bottom surface 5a of the housing portion 5b. As shown in Fig. 1, a depth H3 of the housing portion 5b is substantially equal to the thickness H4 of the electrostatic capacitive sensor 4. As shown in Fig. 1, the back surface 2c1 of the support area 2c of the surface plate 2 is fixed and supported to the top surface 5c1 of a wall portion 5c located around the housing portion 5b. The raw material of the support member 5 is not limited as long as it is a rigid transparent plate.

As shown in Fig. 1, on the back surface of the support member 5, a display device 11 such as LCD is installed at a position opposed to the operation area 2a.

As shown in Fig. 1, when the finger (or pen as the operation object, a finger is used in the embodiment) F is in contact with the operation area 2a of the surface plate 2 and the finger F is moved in a direction S indicated by the arrow, the movement position (movement trace) of the finger F can be detected based on change in capacity of the electrostatic capacitive sensor 4 (first input operation).

As shown in Fig. 3, icons 20 or a cursor 21 may be displayed on the operation area 2a that is the screen display unit. As the first input operation, for example, when the finger F is put on the cursor 21 at the left upper portion displayed on the operation area 2a and the finger F is moved in the right lower direction along the arrow T, the movement position of the finger F is detected by the electrostatic capacitive sensor 4. Then, the cursor 21 can be moved to the right lower portion according to the movement of the finger F.

Alternatively, according to the movement of the finger F, it is possible to move the icon 20, to scroll the display, or to draw characters or pictures in the operation area 2a based on the movement trace of the finger F.

In the present embodiment, as a second input operation as shown in Fig. 2, when the movement of the finger F is stopped and the operation area 2a is pressed down by the finger F without leaving the finger F from the operation area 2a that is the screen display unit at the stop position, the operation area 2a is bent and deformed in the space 12. At this time, the intermediate area 2b around the operation area 2a is also bent, thereby elongating the strain sensor 3 supported to the back surface of the intermediate area 2b and changing the resistance of the strain sensor 3.

As shown in Fig. 4, two output fetch portions 24 and 25 of the bridge circuit having the strain sensor 3 and the fixed resistor 10 are connected to input portions of a differential amplifier 22, and an output portion of the differential amplifier 22 is connected to an external terminal 23. With such a configuration shown in Fig. 4, a differential potential can be obtained based on change in resistance of the strain sensor 3, thereby raising the output value.

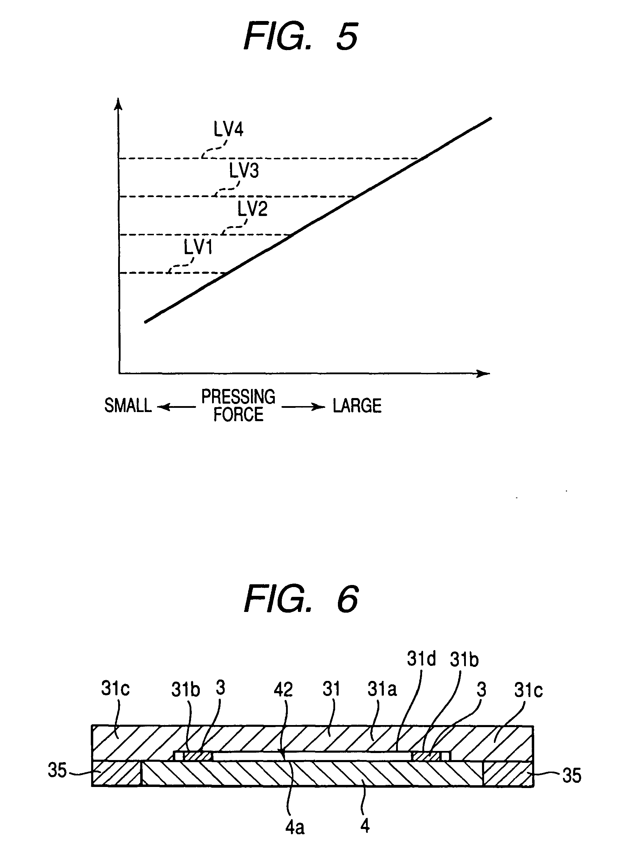

Fig. 5 shows a relation between the pressing force (bending degree) and the output value obtained from the circuit shown in Fig. 4. As shown in Fig. 5, when the pressing force increases, the output value gradually increases. In the present embodiment, the output value is detected as an analog signal, and it is determined whether or not the output value is larger than a predetermined level critical value by a control unit (not shown).

For example, in the control unit, a level LV1 to a level LV4 are set as the critical value of the output value, the output value is converted into a digital signal every when the output value is over each critical value level, and an output signal according to each level is output. When the number of critical value levels is increased, it is possible to raise resolution as much as the increase.

Every when the operation area 2a is pressed down by the finger F and the output value is over each critical value level, the following controls may be performed, for example, the display is changed to gradually increase the size of the cursor 21 shown in Fig. 3, or the volume is gradually turned up in case of the recording mode of music. Alternatively, as the first input operation, a predetermined character is drawn along the movement trace of the finger F on the operation area 2a that is the screen display unit, and then the operation area 2a is pressed by the finger F without leaving the finger from the operation area 2a by the second input operation. At this time, when the output value based on the pressing force is over, for example, the critical value level LV1, it is possible to control the character to be input in a mail sentence, as a determined (defined) signal. In addition, an analog signal may be used as the second input operation signal.

Anyway, according to the present embodiment, it is possible to perform a series of the first input operation of detecting the movement position of the finger F (operation object) on the operation area 2a with the electrostatic capacitive sensor 4, and the second input operation of detecting the pressing force with the strain sensor 3 at the time of pressing the operation area 2a down with the finger F, without leaving the finger F from the operation area 2a, in which the input operation is simple.

As described in the embodiment shown in Figs. 1 to 3, in the present embodiment, since the movement position of the finger F is detected by the electrostatic capacitive sensor 4, it is possible to detect the position with high precision and to appropriately perform the first input operation. As the pressing force detecting means that can detect the pressing force at the time of pressing the operation area 2a with the finger F, the strain sensor 3 is disposed on the back surface of the surface plate 2. With such a configuration, when the operation area 2a of the surface plate 2 is bent, the strain sensor 3 is strained and the pressing force can be detected with change in output power based on change in resistance of the strain sensor 3. With the configuration using the strain sensor 3, the pressing force can be detected with high precision even though the pressed position is anywhere on the operation area 2a. That is, even when the pressed position is the center of the operation area 2a, the strain sensor 3 can be appropriately strained at the end portion and thus it is possible to detect the pressing force with high precision. In addition, the input apparatus 1 can have a simple configuration and can be made thin.

As shown in Fig. 1, the space 12 is formed between the operation area 2a and the electrostatic capacitive sensor 4. Since the space 12 is formed, the operation area 2a is appropriately bendable and deformable at the time of pressing the operation area 2a, and it is possible to detect the pressing force with high precision. Accordingly, it is possible to appropriately perform the second input operation.

The surface plate 2 having the support area 2c around the operation area 2a, and the support area 2c is fixed and supported to the support member 5. Accordingly, when the operation area 2a is pressed, the operation area 2a can be bent and it is possible to detect the pressing force with high precision.

As shown in Fig. 1, the intermediate area 2b is provided between the operation area 2a and the support area 2c, the space 12 extending from the lower portion of the operation area 2a is formed under the intermediate area 2b, the intermediate area 2b is also bendable and deformable together with the operation area 2a, and the strain sensor 3 is disposed on the back surface of the intermediate area 2b. Since the concave portion 2b1 is formed in the intermediate area 2b and the thickness of the intermediate area 2b is smaller than the thickness H1 of the operation area 2a, it is possible to easily bend and deform the operation area 2a. In addition, the strain sensor 3 can be effectively bent, and thus it is possible to detect the pressing force with high precision. In the embodiment shown in Fig. 1, since the operation area 2a is the screen display unit, it is difficult to install the strain sensor 3 on the back surface of the operation area 2a. However, when the intermediate area 2b where the strain sensor 3 can be installed is provided around the operation area 2a as shown in the present embodiment, it is possible to appropriately detect the pressing force with a simple configuration even though any part of the operation area 2a is pressed.

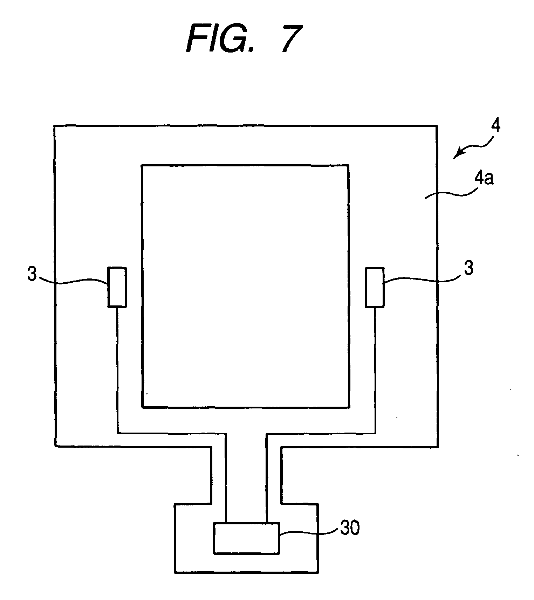

As the embodiment shown in Figs. 6 and 7, the strain sensor 3 may be formed by printing on the surface 4a of the electrostatic capacitive senor 4. As shown in Fig. 7, an IC chip 30 electrically connected to the strain sensor 3 is mounted on the electrostatic capacitive sensor 4.

As shown in Fig. 6, the strain sensor 3 is fixed also to a back surface 31d of a surface plate 31. As shown in Fig. 6, a predetermined space 42 is formed between the back surface 31d of the surface plate 31 and the surface 4a of the electrostatic capacitive sensor 4.

In the embodiment shown in Figs. 6 and 7, the electrostatic capacitive sensor 4 having the strain sensor 3 may be only attached to the back surface 31d of the surface plate 31, and thus the input apparatus can have a simple structure and can be made thin. In addition, the strain sensor 3 and the electrostatic capacitive sensor 4 can be simply and appropriately positioned on the surface plate 31. Similarly with Fig. 1, the surface plate 31 has an operation area 31a, an intermediate area 31b, and a support area 31c. The operation area 31a may be used as a screen display unit. In this case, the strain sensor 3 is provided on the back surface of the intermediate area 31b. The back surface of the support area 31c is fixed and supported to a support member 35.

The present embodiment also includes a type that the operation areas 2a and 31a of the surface plates 2 and 31 is not used as the screen display unit.

In addition, it is possible to simultaneously perform the first input operation of detecting the movement position of the finger F (operation object) on the operation area 2a with the electrostatic capacitive sensor 4, and the second input operation of detecting the pressing force with the strain sensor 3 at the time of pressing the operation area 2a down with the finger F. That is, in the example shown in Fig. 5, when the output value is over the critical value level LV1, it is considered that the second input operation is performed. When the finger F is moved in the state of pressing the operation area 2a with a force enough to be over the critical value level LV1, it is possible to simultaneously perform the first input operation and the second input operation.

There is conceivable a configuration that an electrostatic capacitive sensor having an operation area overlaps with a pressure-sensitive sensor (resistive sensor) detecting a pressing force. In this configuration, when the whole surface of the electrostatic capacitive sensor is used as the operation area, it is difficult to appropriately bend the electrostatic capacitive senor at a peripheral portion of the electrostatic capacitive sensor and the pressing force may not be detected. Accordingly, to detect the pressing force at any position of the operation area, it is preferable to use the strain sensor 3 shown in Fig. 1.

The input apparatus according the embodiment of the invention is applicable to various electronic apparatuses in addition to cellular phones.

## Claims

1. An input apparatus operable to perform a series of a first input operation of detecting a movement position of an operation object on an operation area with an electrostatic capacitive sensor, and a second input operation of detecting a pressing force with a pressing force detecting means at the time of pressing the operation area down with the operation object, without leaving the operation object from the operation area.

2. The input apparatus according to Claim 1, wherein a surface plate is disposed on the electrostatic capacitive sensor and has the operation area, a strain sensor as the pressing force detecting means is disposed between the electrostatic capacitive sensor and the surface plate and fixed to the back surface of the surface plate, the strain sensor is strained when the operation area is bent by the pressing of the operation object, and the pressing force is detected with change in output power based on change in resistance of the strain sensor.

3. An input apparatus comprising:
an electrostatic capacitive sensor;
a surface plate disposed on the electrostatic capacitive sensor and having an operation area; and
a strain sensor disposed between the electrostatic capacitive sensor and the surface plate and fixed to the back surface of the surface plate,
wherein a movement position of the operation object on the operation area is detected by the electrostatic capacitive sensor, the strain sensor is strained when the operation area of the surface plate is bent by the pressing of the operation object, and the pressing force is detected with change in output power based on change in resistance of the strain sensor.

4. The input apparatus according to Claim 2 or 3, wherein the surface plate is provided with a support area in the operation area and on the side of the operation area, and the electrostatic capacitive sensor is disposed at a position opposed to the operation area in a height direction,
wherein a space is formed between the operation area and the electrostatic capacitive sensor to make the surface plate deformable down at the time of pressing down the operation area with the operation object, by which the operation area is supported to be bendable and deformable, and the support area is fixedly supported not to be bendable and deformable.

5. The input apparatus according to Claim 4, wherein the surface plate is provided with an intermediate area between the operation area and the support area, and the intermediate area is bendable and deformable together with the operation area, and
wherein the strain sensor is fixed to the back surface of the intermediate area.

6. The input apparatus according to Claim 5, wherein the operation area is a screen display unit.

7. The input apparatus according to any one of Claims 2 to 6, wherein the strain sensor is formed by printing on the surface of the electrostatic capacitive sensor, and the surface of the strain sensor is fixed to the back surface of the surface plate.

8. The input apparatus according to any one of Claims 2 to 7, wherein a concave portion is formed on the back surface of the surface plate to which the strain sensor is fixed, and the strain sensor is disposed in the concave portion.
